# EUROPEAN PATENT SPECIFICATION

(11) **EP 3 909 491 B1**
(45) Date of publication and mention of the grant of the patent: **21.12.2022**
(21) Application number: 19909388.1
(22) Date of filing: 17.10.2019
(51) Int. Cl.: A47L 9/28, A47L 9/32

(54) **NOISE-CANCELLING COOLING STRUCTURE AND VACUUM CLEANER THEREOF**
KÜHLSTRUKTUR ZUR GERÄUSCHUNTERDRÜCKUNG UND STAUBSAUGER DAMIT
STRUCTURE DE REFROIDISSEMENT À SUPPRESSION DE BRUIT ET ASPIRATEUR ASSOCIÉ

(30) Priority: 07.01.2019 CN 201910015135
(43) Date of publication of application: 17.11.2021
(73) Proprietor: Gree Electric Appliances, Inc. of Zhuhai, Zhuhai, Guangdong 519070 (CN)
(72) Inventor: REN, Min, Zhuhai, Guangdong 519070 (CN); LIAO, Hongbin, Zhuhai, Guangdong 519070 (CN); WANG, Dexu, Zhuhai, Guangdong 519070 (CN); HUANG, Yuelin, Zhuhai, Guangdong 519070 (CN); CHEN, Yong, Zhuhai, Guangdong 519070 (CN); LI, Ji, Zhuhai, Guangdong 519070 (CN); CHEN, Shanyi, Zhuhai, Guangdong 519070 (CN); HAN, Xuedong, Zhuhai, Guangdong 519070 (CN)
(74) Representative: V.O.
(86) International application number: PCT/CN2019/111552
(87) International publication number: WO 2020/143264

(56) References cited:
- WO-A1-2014/021116
- CN-A- 108 742 297
- DE-U1-202017 000 984
- JP-A- S6 141 425
- JP-A- S63 262 118

## Description

### Technical Field

The present invention relates to the technical field of household appliances, and in particular, to a noise reduction and heat dissipation structure and a dust collector with noise reduction and heat dissipation structure.

### Background

With the advancement of science and technology, more and more portable household appliances are popularized in every family. A hand-held cordless dust collector can be used for cleaning in various environments as its light weight, small volume and easy operation, and thus is becoming more and more popular in many families. With the upgrading and updating of technologies, the motor power of the hand-held dust collector is getting higher and higher, and the corresponding suction force becomes stronger, as a result, the noise generated by the high-speed rotation of the motor becomes larger, and a user has bad experience if there is a lack of an improved noise reduction structure. At the same time, in order to match with a high-power motor, increasingly higher requirements on the battery are put forward for the dust collector. The quality and capacity of a battery directly determine the endurance duration of a cordless dust collector, and a battery pack with a good quality and a large capacity can certainly bring a longer endurance time to the cordless dust collector. However, during operation of a battery pack with a large capacity, the temperature rise of the battery caused thereby is also a problem which needs to be solved urgently. A noise reduction and heat dissipation structure is already known e.g from WO-A-2014021116.

### Summary

The main object of the present invention is to provide a noise reduction and heat dissipation structure and a dust collector, which not only can reduce noise, but also can reduce the temperature of a battery.

In order to solve the described technical problem, the present invention is implemented using the following technical solutions:
The present invention provides a noise reduction and heat dissipation structure, comprising a motor housing, a motor, a battery housing and a battery pack, and the battery pack being located at an end of the motor, wherein the battery pack has a hollow annular structure, and a gap is provided between the battery pack and the battery housing; and a hollow channel of the battery pack and the gap form an airflow channel, an outlet of the airflow channel is an exhaust port, and the exhaust port is provided on the motor housing.

In one of the embodiments, an end, close to the motor housing, of the battery housing is provided with a battery housing first interface and a battery housing second interface, and an airflow flowing out of the motor flows in from the battery housing first interface and flows out from the battery housing second interface.

In one of the embodiments, the exhaust port provided on the motor housing is provided at an end of the motor housing close to the battery housing.

After being discharged from the motor, an airflow enters the hollow channel of the battery pack through the battery housing first interface, passes through the gap between the battery pack and the battery housing, and then passes through the battery housing second interface and is discharged from the exhaust port provided on the motor housing.

In one of the embodiments, axes of the motor and the battery pack are collinear, allowing for an unobstructed airflow passageway, better facilitating noise reduction.

In one of the embodiments, the battery housing is internally provided with a plurality of convex ribs, and the convex ribs limit the battery pack in a circumferential direction and a radial direction.

Another aspect of the present invention provides a noise reduction and heat dissipation structure, comprising a motor housing, a motor, a battery housing and a battery pack, and the battery pack being located at an end of the motor, wherein the battery pack has a hollow annular structure, the motor housing internally comprises a motor inner housing, and the motor inner housing is in communication with a hollow channel of the battery pack; a gap is provided between the battery pack and the battery housing; the hollow channel of the battery pack and the gap form an airflow channel, and an outlet of the airflow channel is an exhaust port; and the handle is internally provided with a handle ventilation passage, the exhaust port is provided on the handle, and the handle ventilation passage is in communication with the gap between the battery pack and the battery housing and the exhaust port. It can be determined that the adding a handle ventilation passage greatly elongates the circulation channel of an airflow.

In one of the embodiments, an end, close to the motor housing, of the battery housing is provided with a battery housing first interface and a battery housing second interface, and an airflow flowing out of the motor flows in from the battery housing first interface and flows out from the battery housing second interface.

In one of the embodiments, two ends of the motor inner housing are respectively provided with a motor inner housing first interface and a motor inner housing second interface; the motor inner housing first interface and the motor inner housing second interface are configured to have a necked shape; and the motor inner housing second interface is in communication with the battery housing first interface. The function of the motor inner housing is to restrict the flowing direction of an airflow, introducing the airflow discharged from the motor into the hollow channel of the battery pack, thereby forming a complete airflow loop and increasing the length of the airflow channel.

In one of the embodiments, the exhaust port is provided at the bottom of the handle ventilation passage of the handle; and the handle ventilation passage has one end in communication with the exhaust port, and the other end in communication with the gap between the battery pack and the battery housing. The ventilation passage of the handle part greatly elongates the airflow channel, thereby achieving the purpose of further reducing noise and dissipating heat.

After being discharged from the motor, an airflow successively passes through the motor inner housing second interface and the battery housing first interface, then enters the hollow channel of the battery pack, thereafter passes through the gap between the battery pack and the battery housing, passes through the battery housing second interface, passes through the handle ventilation passage, and finally is discharged from the exhaust port provided at the bottom of the handle.

In one of the embodiments, axes of the motor and the battery pack are collinear, allowing for an unobstructed airflow passageway, better facilitating noise reduction.

In one of the embodiments, the battery housing is internally provided with a plurality of convex ribs, and the convex ribs limit the battery pack in a circumferential direction and a radial direction.

Another aspect of the present invention provides a dust collector, comprising an air inlet pipe, a dust collection cup, a handle and a separator, and the separator being provided in the dust collection cup, using the noise reduction and heat dissipation structure with any of the described technical features.

An airflow is sucked tangentially from an air inlet of the air inlet pipe, and reaches the separator to be subject to cyclone separation and then reaches the motor, the airflow discharged from the motor enters the hollow channel of the battery pack through the battery housing first interface, passes through the gap between the battery pack and the battery housing, and then passes through the battery housing second interface and is discharged from the exhaust port provided on the motor housing.

Alternatively, an airflow is sucked tangentially from an air inlet of the air inlet pipe, and reaches the separator to be subject to cyclone separation and then enters the motor from the motor inner housing first interface, and after being discharged from the motor, passes through the motor inner housing second interface and the battery housing first interface, and then enters the hollow channel of the battery pack, thereafter passes through the gap between the battery pack and the battery housing, passes through the battery housing second interface, passes through the handle ventilation passage, and finally is discharged from the exhaust port provided at the bottom of the handle.

Beneficial effects:
The battery housing in the present invention has only two openings, one being an air inlet and the other being an air outlet, facilitating forming a closed and complete airflow channel.

After being discharged from the motor, an airflow enters the hollow channel of the battery pack, then passes through the gap between the battery pack and the battery housing, and finally is discharged from the exhaust port provided on the motor housing; alternatively, after being discharged from the motor, an airflow passes through the motor inner housing second interface and then enters the hollow channel of the battery pack, thereafter passes through the gap between the battery pack and the battery housing, passes through the handle ventilation passage, and finally is discharged from the exhaust port provided at the bottom of the handle, the airflow passageway is greatly elongated, so that noise caused by friction between an airflow at an air outlet of the motor and the air outlet can be attenuated. Furthermore, the airflow passageway is located at the middle and the periphery of the battery pack, and has a good heat dissipation effect on the battery pack when a high-speed airflow passes through the passageway, thereby effectively reducing the temperature of the battery pack, solving the problem that the battery temperature rises too high when the motor of the dust collector continues working at a high speed.

The axes of the motor and the battery pack are collinear, allowing for an unobstructed airflow passageway, better facilitating noise reduction.

The battery housing is internally provided with a plurality of convex ribs, and the convex ribs limit the battery pack in a circumferential direction and a radial direction, so that not only the battery pack can be fixed, but also an unobstructed airflow passageway can be formed between the battery pack and the battery housing, facilitating the flowing of an airflow.

A motor inner housing encloses the motor, the motor housing further encloses the motor inner housing, first and second interfaces of the motor inner housing are respectively connected to a dust collection cup part and a battery part in a sealed manner, and the structure of the motor inner housing defines the flowing direction of an airflow when passing through the motor part, and has beneficial functions of noise reduction, vibration attenuation, etc.

### Brief Description of the Drawings

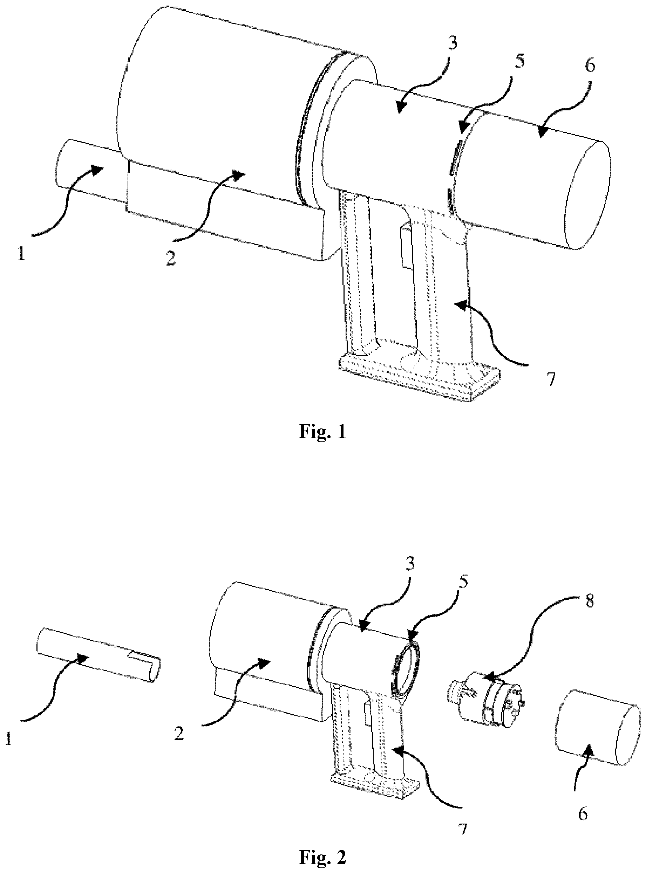

Fig. 1 is a perspective view of a dust collector according to Embodiment I of the present invention.
Fig. 2 is an explosive view showing the structure of a dust collector according to Embodiment I of the present invention.

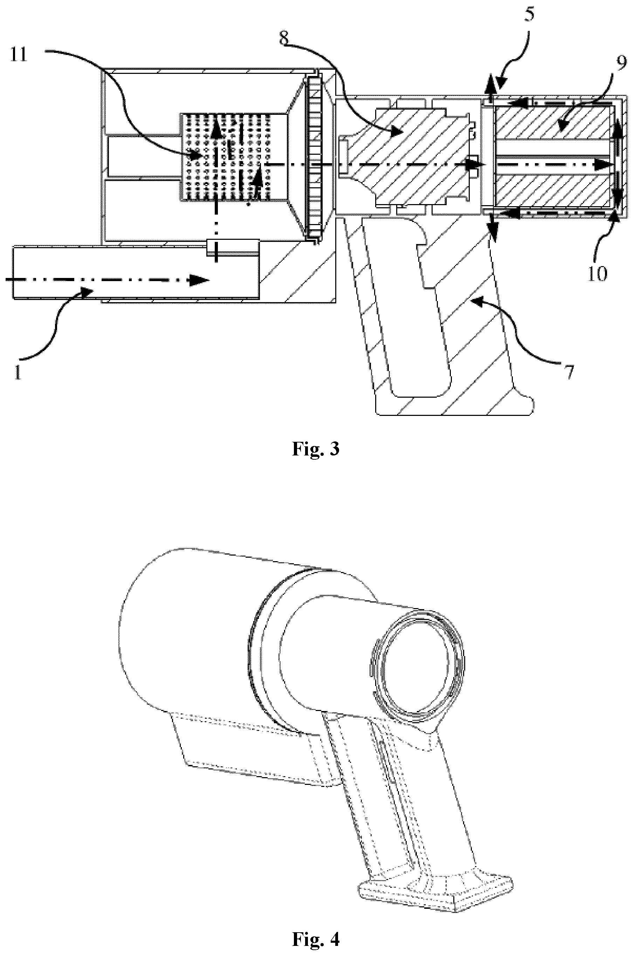

Fig. 3 is a flowing direction diagram of an airflow of a dust collector according to Embodiment I of the present invention.
Fig. 4 is a sectional view of a main machine part according to Embodiment I of the present invention.

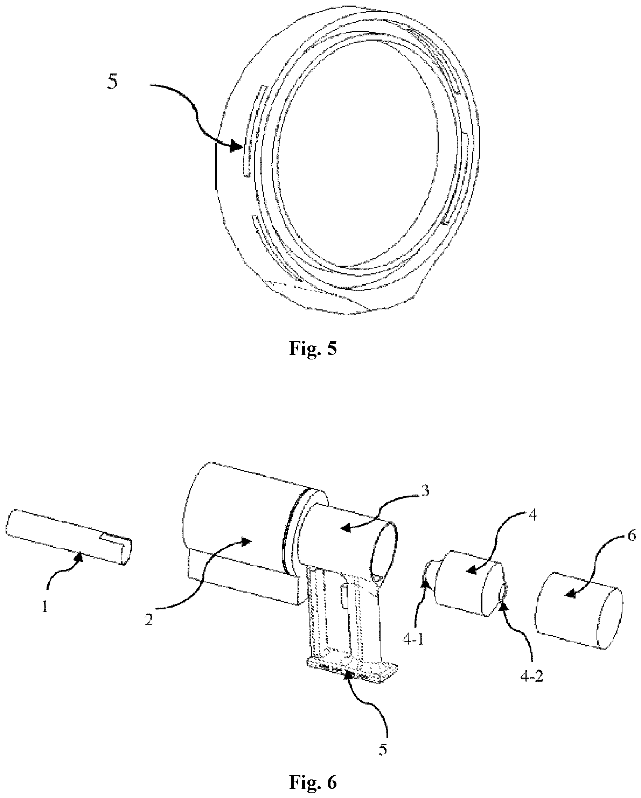

Fig. 5 is an enlarged view of an exhaust port according to Embodiment I of the present invention.
Fig. 6 is an explosive view showing the structure of a dust collector according to Embodiment II of the present invention.

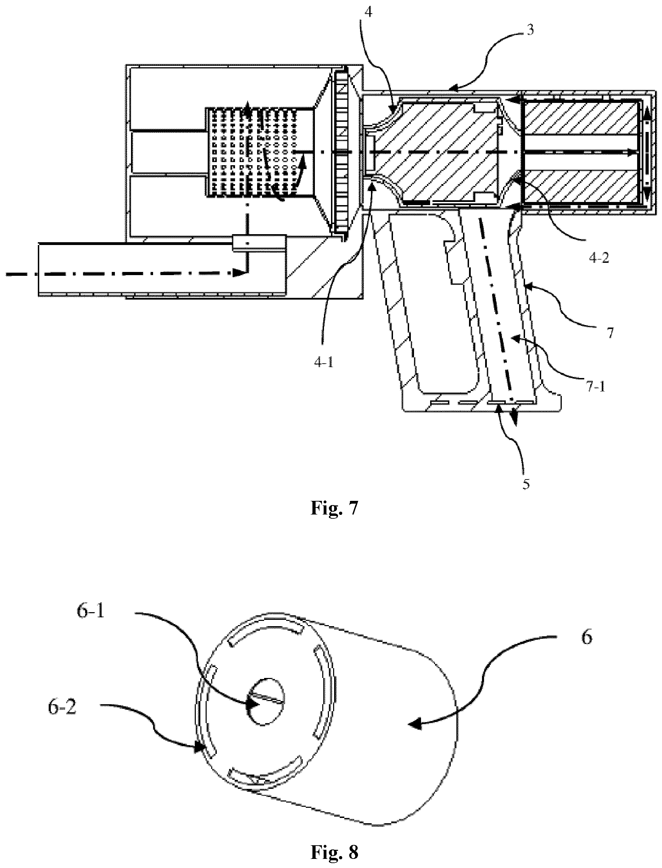

Fig. 7 is a flowing direction diagram of an airflow of a dust collector according to Embodiment II of the present invention.
Fig. 8 is a schematic diagram of a battery housing according to the present invention.

In the figures: 1: air inlet pipe; 2: dust collection cup; 3: motor housing; 4: motor inner housing; 4-1: motor inner housing first interface; 4-2: motor inner housing second interface; 5: exhaust port; 6: battery housing; 6-1: battery housing first interface; 6-2: battery housing second interface; 7: handle; 7-1: handle ventilation passage; 8: motor; 9: battery pack; 10: convex rib; 11: separator.

### Detailed Description of the Embodiments

In the following, preferred mechanism and movement implementation method of the present invention will be further described in combination with the drawings and embodiments.

The present invention is implemented by the following technical solutions:

### Embodiment I

As shown in the figure, the present invention provides a noise reduction and heat dissipation structure, comprising a motor housing 3, an exhaust port 5, a battery housing 6, a motor 8, a battery pack 9, and convex ribs 10.

The motor 8 is provided in the motor housing 3; and the battery pack 9 is provided in the battery housing 6.

The battery housing 6 has only two openings, one being a battery housing first interface 6-1, and the other being a battery housing second interface 6-2; and the exhaust port 5 is provided at an end of the motor housing 3 close to the battery housing 6.

The battery pack 9 has a hollow annular structure; the battery housing 6 is internally provided with a plurality of convex ribs 10, and the convex ribs 10 limit the battery pack 9 in a circumferential direction and a radial direction, and a gap is provided between the battery pack 9 and the battery housing 6; and a hollow channel of the battery pack 9 has one end abutting against the motor 8, and the other end in communication with the gap between the battery pack 9 and the battery housing 6.

The hollow channel of the battery pack 9 and the gap form an airflow channel.

After being discharged from the motor 8, an airflow enters the hollow channel of the battery pack 9 through the battery housing first interface 6-1, passes through the gap between the battery pack 9 and the battery housing 6, and then passes through the battery housing second interface 6-2 and is discharged from the exhaust port 5 provided on the motor housing 3.

In order to achieve the object of the present invention, the present invention also provides a dust collector, comprising the described noise reduction and heat dissipation structure, and further comprising an air inlet pipe 1, a dust collection cup 2 and a handle 7, the dust collection cup 2 comprising a separator 11 therein.

An airflow is sucked tangentially from an air inlet of the air inlet pipe 1, and reaches the separator 11 to be subject to cyclone separation and then enters the motor 8, the airflow discharged from the motor 8 enters the hollow channel of the battery pack 9 through the battery housing first interface 6-1, passes through the gap between the battery pack 9 and the battery housing 6, and then passes through the battery housing second interface 6-2 and is discharged from the exhaust port 5 provided on the motor housing 3.

### Embodiment II:

On the basis of Embodiment I, a motor inner housing 4 is added, the motor inner housing 4 encloses the motor 8, and the motor housing 3 further encloses the motor inner housing 4, the motor inner housing first interface 4-1 and the motor inner housing second interface 4-2 are respectively connected to a dust collection cup 2 and a battery housing first interface 6-1 in a sealed manner, and the structure of the motor inner housing defines the flowing direction of an airflow when passing through the motor part.

At the same time, a handle ventilation passage 7-1 is additionally provided in the handle, and the exhaust port 5 is provided at the bottom of the handle 7, so that the handle ventilation passage 7-1 has one end in communication with the exhaust port 5, and the other end in communication with the gap between the battery pack 9 and the battery housing 6.

An airflow flowing out through the gap between the battery pack 9 and the battery housing 6 passes through the battery housing second interface 6-2, then passes through the handle ventilation passage 7-1, and finally is discharged from the exhaust port 5.

Compared with the Embodiment I, the airflow passageway is greatly elongated due to the addition of the handle part, better facilitating noise reduction and temperature reduction.

In order to achieve the object of the present invention, the present invention also provides a dust collector, comprising the described noise reduction and heat dissipation structure, and further comprising an air inlet pipe 1, a dust collection cup 2 and a handle 7, the dust collection cup 2 comprising a separator 11 therein.

An airflow is sucked tangentially from an air inlet of the air inlet pipe 1, and reaches the separator 11 to be subject to cyclone separation and then enters the motor 8 from the motor inner housing first interface 4-1, and after being discharged from the motor 8, passes through the motor inner housing second interface 4-2 and the battery housing first interface 6-1, and then enters the hollow channel of the battery pack 9, thereafter passes through the gap between the battery pack 9 and the battery housing 6, passes through the battery housing second interface 6-2, passes through the handle ventilation passage 7-1, and finally is discharged from the exhaust port 5 provided at the bottom of the handle 7.

Finally, it should be noted that the embodiments described above are merely preferred embodiments of the present invention, and are not intended to limit the present invention. Although the present invention has been described in detail by referring to the embodiments, a person skilled in the art can still modify the technical solutions disclosed in the above respective embodiments or make equivalent replacements for some of technical features therein.

## Claims

1. A noise reduction and heat dissipation structure, comprising a motor housing (3), a motor (8), a battery housing (6) and a battery pack (9), and the battery pack (9) being located at an end of the motor (8), **characterized in that** the battery pack (9) has a hollow annular structure, and a gap is provided between the battery pack (9) and the battery housing (6); and a hollow channel of the battery pack (9) and the gap form an airflow channel, an outlet of the airflow channel is an exhaust port (5), and the exhaust port (5) is provided on the motor housing (3).

2. The noise reduction and heat dissipation structure as claimed in claim 1, wherein an end, close to the motor housing (3), of the battery housing (6) is provided with a battery housing first interface (6-1) and a battery housing second interface (6-2), and an airflow flowing out of the motor (8) flows in from the battery housing first interface (6-1) and flows out from the battery housing second interface (6-2).

3. The noise reduction and heat dissipation structure as claimed in claim 2, wherein the exhaust port (5) provided on the motor housing (3) is provided at an end of the motor housing (3) close to the battery housing (6).

4. The noise reduction and heat dissipation structure as claimed in claim 3, wherein after being discharged from the motor (8), an airflow enters the hollow channel of the battery pack (9) through the battery housing first interface (6-1), passes through the gap between the battery pack (9) and the battery housing (6), and then passes through the battery housing second interface (6-2) and is discharged from the exhaust port (5) provided on the motor housing (3).

5. The noise reduction and heat dissipation structure as claimed in any one of claims 1 to 4, wherein axes of the motor (8) and the battery pack (9) are collinear.

6. The noise reduction and heat dissipation structure as claimed in claim 5, wherein the battery housing (6) is internally provided with a plurality of convex ribs (10), and the convex ribs (10) limit the battery pack (9) in a circumferential direction and a radial direction.

7. A noise reduction and heat dissipation structure, comprising a motor housing (3), a motor (8), a battery housing (6) and a battery pack (9), and the battery pack (9) being located at an end of the motor (8), wherein the battery pack (9) has a hollow annular structure, the motor housing (3) internally comprises a motor inner housing (4), and the motor inner housing (4) is in communication with a hollow channel of the battery pack (9); a gap is provided between the battery pack (9) and the battery housing (6); the hollow channel of the battery pack (9) and the gap form an airflow channel, and an outlet of the airflow channel is an exhaust port (5); and a handle (7) of a dust collector is internally provided with a handle ventilation passage (7-1), the exhaust port (5) is provided on the handle (7), and the handle ventilation passage (7-1) is in communication with the gap between the battery pack (9) and the battery housing (6) and the exhaust port (5).

8. The noise reduction and heat dissipation structure as claimed in claim 7, wherein an end, close to the motor housing (3), of the battery housing (6) is provided with a battery housing first interface (6-1) and a battery housing second interface (6-2), and an airflow flowing out of the motor (8) flows in from the battery housing first interface (6-1) and flows out from the battery housing second interface (6-2).

9. The noise reduction and heat dissipation structure as claimed in claim 8, wherein two ends of the motor inner housing (4) are respectively provided with a motor inner housing first interface (4-1) and a motor inner housing second interface (4-2); the motor inner housing first interface (4-1) and the motor inner housing second interface (4-2) are configured to have a necked shape; and the motor inner housing second interface( 4-2) is in communication with the battery housing first interface (6-1).

10. The noise reduction and heat dissipation structure as claimed in claim 9, wherein the exhaust port (5) is provided at a bottom of the handle ventilation passage (7-1) of the handle (7); and one end of the handle ventilation passage (7-1) is in communication with the exhaust port (5), and the other end of the handle ventilation passage (7-1) is in communication with the gap between the battery pack (9) and the battery housing (6), after being discharged from the motor (8), an airflow successively passes through the motor inner housing second interface (4-2) and the battery housing first interface (6-1), then enters the hollow channel of the battery pack (9), thereafter passes through the gap between the battery pack (9) and the battery housing (6), passes through the battery housing second interface (6-2), passes through the handle ventilation passage (7-1), and finally is discharged from the exhaust port (5) provided at the bottom of the handle (7).

11. The noise reduction and heat dissipation structure as claimed in any one of claims 7 to 10, wherein axes of the motor (8) and the battery pack (9) are collinear.

12. The noise reduction and heat dissipation structure as claimed in claim 11, wherein the battery housing (6) is internally provided with a plurality of convex ribs (10), and the convex ribs (10) limit the battery pack (9) in a circumferential direction and a radial direction.

13. A dust collector, comprising an air inlet pipe (1), a dust collection cup (2), a handle (7) and a separator (11), and the separator (11) being provided in the dust collection cup (2), wherein using the noise reduction and heat dissipation structure as claimed in any one of claims 1 to 4, 6, 7 to 10, and 12.

14. The dust collector as claimed in claim 13, wherein an airflow is sucked tangentially from an air inlet of the air inlet pipe (1), and reaches the separator (11) to be subject to cyclone separation and then reaches the motor (8), the airflow discharged from the motor (8) enters the hollow channel of the battery pack (9) through the battery housing first interface (6-1), passes through the gap between the battery pack (9) and the battery housing (6), and then passes through the battery housing second interface (6-2) and is discharged from the exhaust port (5) provided on the motor housing (3).

15. The dust collector as claimed in claim 13, wherein an airflow is sucked tangentially from an air inlet of the air inlet pipe (1), and reaches the separator (11) to be subject to cyclone separation and then enters the motor (8) from the motor inner housing first interface (4-1), and after being discharged from the motor (8), passes through the motor inner housing second interface (4-2) and the battery housing first interface (6-1), and then enters the hollow channel of the battery pack (9), thereafter passes through the gap between the battery pack (9) and the battery housing (6), passes through the battery housing second interface (6-2), passes through the handle ventilation passage (7-1), and finally is discharged from the exhaust port (5) provided at the bottom of the handle (7).

## Patentansprüche

1. Geräuschreduzierungs- und Wärmeableitungsstruktur, umfassend ein Motorgehäuse (3), einen Motor (8), ein Batteriegehäuse (6) und ein Batteriepaket (9), und wobei sich das Batteriepaket (9) an einem Ende des Motors (8) befindet, **dadurch gekennzeichnet, dass** das Batteriepaket (9) eine hohle ringförmige Struktur aufweist und ein Spalt zwischen dem Batteriepaket (9) und dem Batteriegehäuse (6) bereitgestellt ist; und ein hohler Kanal des Batteriepakets (9) und der Spalt einen Luftstromkanal bilden, ein Auslass des Luftstromkanals eine Auslassöffnung (5) ist und die Auslassöffnung (5) an dem Motorgehäuse (3) bereitgestellt ist.

2. Geräuschreduzierungs- und Wärmeableitungsstruktur nach Anspruch 1, wobei ein Ende des Batteriegehäuses (6) in der Nähe des Motorgehäuses (3) mit einer ersten Batteriegehäuseschnittstelle (6-1) und einer zweiten Batteriegehäuseschnittstelle (6-2) bereitgestellt ist, und ein aus dem Motor (8) strömender Luftstrom von der ersten Batteriegehäuseschnittstelle (6-1) einströmt und von der zweiten Batteriegehäuseschnittstelle (6-2) ausströmt.

3. Geräuschreduzierungs- und Wärmeableitungsstruktur nach Anspruch 2, wobei die an dem Motorgehäuse (3) bereitgestellte Auslassöffnung (5) an einem Ende des Motorgehäuses (3) in der Nähe des Batteriegehäuses (6) bereitgestellt ist.

4. Geräuschreduzierungs- und Wärmeableitungsstruktur nach Anspruch 3, wobei ein Luftstrom nach Austreten aus dem Motor (8) durch die erste Batteriegehäuseschnittstelle (6-1) in den hohlen Kanal des Batteriepakets (9) eintritt, durch den Spalt zwischen dem Batteriepaket (9) und dem Batteriegehäuse (6) verläuft und dann durch die zweite Batteriegehäuseschnittstelle (6-2) verläuft und aus der an dem Motorgehäuse (3) bereitgestellten Auslassöffnung (5) austritt.

5. Geräuschreduzierungs- und Wärmeableitungsstruktur nach einem der Ansprüche 1 bis 4, wobei Achsen des Motors (8) und des Batteriepakets (9) kollinear sind.

6. Geräuschreduzierungs- und Wärmeableitungsstruktur nach Anspruch 5, wobei das Batteriegehäuse (6) innen mit einer Vielzahl von konvexen Rippen (10) bereitgestellt ist und die konvexen Rippen (10) das Batteriepaket (9) in einer Umfangsrichtung und einer radialen Richtung begrenzen.

7. Geräuschreduzierungs- und Wärmeableitungsstruktur, umfassend ein Motorgehäuse (3), einen Motor (8), ein Batteriegehäuse (6) und ein Batteriepaket (9), und wobei sich das Batteriepaket (9) an einem Ende des Motors (8) befindet, wobei das Batteriepaket (9) eine hohle ringförmige Struktur aufweist, das Motorgehäuse (3) im Inneren ein Motorinnengehäuse (4) umfasst und das Motorinnengehäuse (4) in Verbindung mit einem hohlen Kanal des Batteriepakets (9) ist; ein Spalt zwischen dem Batteriepaket (9) und dem Batteriegehäuse (6) bereitgestellt ist; der hohle Kanal des Batteriepakets (9) und der Spalt einen Luftstromkanal bilden und ein Auslass des Luftstromkanals eine Auslassöffnung (5) ist; und ein Griff (7) eines Staubsammlers im Inneren mit einem Griffbelüftungsdurchgang (7-1) bereitgestellt ist, die Auslassöffnung (5) an dem Griff (7) bereitgestellt ist und der Griffbelüftungsdurchgang (7-1) mit dem Spalt zwischen dem Batteriepaket (9) und dem Batteriegehäuse (6) und der Auslassöffnung (5) in Verbindung ist.

8. Geräuschreduzierungs- und Wärmeableitungsstruktur nach Anspruch 7, wobei ein Ende des Batteriegehäuses (6) in der Nähe des Motorgehäuses (3) mit einer ersten Batteriegehäuseschnittstelle (6-1) und einer zweiten Batteriegehäuseschnittstelle (6-2) bereitgestellt ist, und ein aus dem Motor (8) strömender Luftstrom von der ersten Batteriegehäuseschnittstelle (6-1) einströmt und von der zweiten Batteriegehäuseschnittstelle (6-2) ausströmt.

9. Geräuschreduzierungs- und Wärmeableitungsstruktur nach Anspruch 8, wobei zwei Enden des Motorinnengehäuses (4) jeweils mit einer ersten Motorinnengehäuseschnittstelle (4-1) und einer zweiten Motorinnengehäuseschnittstelle (4-2) bereitgestellt sind; die erste Motorinnengehäuseschnittstelle (4-1) und die zweite Motorinnengehäuseschnittstelle (4-2) konfiguriert sind, um eine verengte Form aufzuweisen; und die zweite Motorinnengehäuseschnittstelle ( 4-2) mit der ersten Batteriegehäuseschnittstelle (6-1) in Verbindung ist.

10. Geräuschreduzierungs- und Wärmeableitungsstruktur nach Anspruch 9, wobei die Auslassöffnung (5) an einem Boden des Griffbelüftungsdurchgangs (7-1) des Griffs (7) bereitgestellt ist; und ein Ende des Griffbelüftungsdurchgangs (7-1) mit der Auslassöffnung (5) in Verbindung ist und das andere Ende des Griffbelüftungsdurchgangs (7-1) mit dem Spalt zwischen dem Batteriepaket (9) und dem Batteriegehäuse (6) in Verbindung ist, wobei ein Luftstrom, nachdem er aus dem Motor (8) ausgetreten ist, nacheinander durch die zweite Motorinnengehäuseschnittstelle (4-2) und die erste Batteriegehäuseschnittstelle (6-1) verläuft, dann in den hohlen Kanal des Batteriepakets (9) eintritt, danach durch den Spalt zwischen dem Batteriepaket (9) und dem Batteriegehäuse (6) verläuft, durch die zweite Batteriegehäuseschnittstelle (6-2) verläuft, durch den Griffbelüftungsdurchgang (7-1) verläuft und schließlich aus der Auslassöffnung (5), die an der Unterseite des Griffs (7) bereitgestellt ist, austritt.

11. Geräuschreduzierungs- und Wärmeableitungsstruktur nach einem der Ansprüche 7 bis 10, wobei Achsen des Motors (8) und des Batteriepakets (9) kollinear sind.

12. Geräuschreduzierungs- und Wärmeableitungsstruktur nach Anspruch 11, wobei das Batteriegehäuse (6) innen mit einer Vielzahl von konvexen Rippen (10) bereitgestellt ist und die konvexen Rippen (10) das Batteriepaket (9) in einer Umfangsrichtung und einer radialen Richtung begrenzen.

13. Staubsammler, umfassend ein Lufteinlassrohr (1), einen Staubsammelbecher (2), einen Griff (7) und einen Abscheider (11), und wobei der Abscheider (11) in dem Staubsammelbecher (2) bereitgestellt ist, wobei die Geräuschreduzierungs- und Wärmeableitungsstruktur nach einem der Ansprüche 1 bis 4, 6, 7 bis 10 und 12 verwendet wird.

14. Staubsammler nach Anspruch 13, wobei ein Luftstrom tangential von einem Lufteinlass des Lufteinlassrohrs (1) angesaugt wird und den Abscheider (11) erreicht, um einer Zyklonabscheidung unterzogen zu werden, und dann den Motor (8) erreicht, der von dem Motor (8) ausgetretene Luftstrom durch die erste Batteriegehäuseschnittstelle (6-1) in den hohlen Kanal des Batteriepakets (9) eintritt, durch den Spalt zwischen dem Batteriepaket (9) und dem Batteriegehäuse (6) verläuft und dann durch die zweite Batteriegehäuseschnittstelle (6-2) verläuft und aus der an dem Motorgehäuse (3) bereitgestellten Auslassöffnung (5) austritt.

15. Staubsammler nach Anspruch 13, wobei ein Luftstrom tangential von einem Lufteinlass des Lufteinlassrohrs (1) angesaugt wird und den Abscheider (11) erreicht, um einer Zyklonabscheidung unterzogen zu werden, und dann von der ersten Motorinnengehäuseschnittstelle (4-1) in den Motor (8) eintritt, und nach Austreten aus dem Motor (8) durch die zweite Motorinnengehäuseschnittstelle (4-2) und die erste Batteriegehäuseschnittstelle (6-1) verläuft und dann in den hohlen Kanal des Batteriepacks (9) eintritt, danach durch den Spalt zwischen dem Batteriepack (9) und dem Batteriegehäuse (6) verläuft, durch die zweite Batteriegehäuseschnittstelle (6-2) verläuft, durch den Griffbelüftungsdurchgang (7-1) verläuft und schließlich aus der Auslassöffnung (5), die an der Unterseite des Griffs (7) bereitgestellt ist, austritt.

## Revendications

1. Structure de réduction de bruit et de dissipation de chaleur, comprenant un carter de moteur (3), un moteur (8), un carter de batterie (6) et un bloc batterie (9), et le bloc batterie (9) étant situé à une extrémité du moteur (8), **caractérisée** en ce quele bloc batterie (9) a une structure annulaire creuse, et un espace est prévu entre le bloc batterie (9) et le carter de batterie (6) ; et un canal creux du bloc batterie (9) et l'espace forment un canal d'écoulement d'air, une sortie du canal d'écoulement d'air est un orifice d'échappement (5), et l'orifice d'échappement (5) est prévu sur le carter de moteur (3).

2. Structure de réduction de bruit et de dissipation de chaleur selon la revendication 1, dans laquelle une extrémité, proche du carter de moteur (3), du carter de batterie (6) est pourvue d'une première interface de carter de batterie (6-1) et d'une seconde interface de carter de batterie (6-2), et un flux d'air sortant du moteur (8) pénètre depuis la première interface de carter de batterie (6-1) et sort depuis la seconde interface de carter de batterie (6-2).

3. Structure de réduction de bruit et de dissipation de chaleur selon la revendication 2, dans laquelle l'orifice d'échappement (5) prévu sur le carter de moteur (3) est prévu à une extrémité du carter de moteur (3) proche du carter de batterie (6).

4. Structure de réduction de bruit et de dissipation de chaleur selon la revendication 3, dans laquelle après avoir été déchargé du moteur (8), un flux d'air entre dans le canal creux du bloc batterie (9) à travers la première interface de carter de batterie (6-1), traverse l'espace entre le bloc batterie (9) et le carter de batterie (6), puis traverse la seconde interface de carter de batterie (6-2) et est évacué depuis l'orifice d'échappement (5) prévu sur le carter de moteur (3).

5. Structure de réduction de bruit et de dissipation de chaleur selon l'une quelconque des revendications 1 à 4, dans laquelle les axes du moteur (8) et du bloc batterie (9) sont colinéaires.

6. Structure de réduction de bruit et de dissipation de chaleur selon la revendication 5, dans laquelle le carter de batterie (6) est pourvu à l'intérieur d'une pluralité de nervures convexes (10), et les nervures convexes (10) limitent le bloc batterie (9) dans une direction circonférentielle et une direction radiale.

7. Structure de réduction de bruit et de dissipation de chaleur, comprenant un carter de moteur (3), un moteur (8), un carter de batterie (6) et un bloc batterie (9), et le bloc batterie (9) étant situé à une extrémité du moteur (8), dans laquelle le bloc batterie (9) a une structure annulaire creuse, le carter de moteur (3) comprend à l'intérieur un carter intérieur de moteur (4), et le carter intérieur de moteur (4) est en communication avec un canal creux du bloc batterie (9) ; un espace est prévu entre le bloc batterie (9) et le carter de batterie (6) ; le canal creux du bloc batterie (9) et l'espace forment un canal d'écoulement d'air, et une sortie du canal d'écoulement d'air est un orifice d'échappement (5) ; et une poignée (7) d'un collecteur de poussière est dotée à l'intérieur d'un passage de ventilation de poignée (7-1), l'orifice d'échappement (5) est prévu sur la poignée (7), et le passage de ventilation de poignée (7-1) est en communication avec l'espace entre le bloc batterie (9) et le carter de batterie (6) et l'orifice d'échappement (5).

8. Structure de réduction de bruit et de dissipation de chaleur selon la revendication 7, dans laquelle une extrémité, proche du carter de moteur (3), du carter de batterie (6) est pourvue d'une première interface de carter de batterie (6-1) et d'une seconde interface de carter de batterie (6-2), et un flux d'air sortant du moteur (8) pénètre depuis la première interface de carter de batterie (6-1) et sort depuis la seconde interface de carter de batterie (6-2).

9. Structure de réduction de bruit et de dissipation de chaleur selon la revendication 8, dans laquelle deux extrémités du carter intérieur de moteur (4) sont respectivement pourvues d'une première interface de carter intérieur de moteur (4-1) et d'une seconde interface de carter intérieur de moteur (4-2) ; la première interface de carter intérieur de moteur (4-1) et la seconde interface de carter intérieur de moteur (4-2) sont configurées pour avoir une forme étranglée ; et la seconde interface de carter intérieur de moteur (4-2) est en communication avec la première interface de carter de batterie (6-1).

10. Structure de réduction de bruit et de dissipation de chaleur selon la revendication 9, dans laquelle l'orifice d'échappement (5) est prévu au bas du passage de ventilation de poignée (7-1) de la poignée (7) ; et une extrémité du passage de ventilation de poignée (7-1) est en communication avec l'orifice d'échappement (5), et l'autre extrémité du passage de ventilation de poignée (7-1) est en communication avec l'espace entre le bloc batterie (9) et le carter de batterie (6), après avoir été évacué du moteur (8), un flux d'air traverse successivement la seconde interface de carter intérieur de moteur (4-2) et la première interface de carter de batterie (6-1), puis entre dans le canal creux du bloc batterie (9), traverse ensuite l'espace entre le bloc batterie (9) et le carter de batterie (6), traverse la seconde interface de carter de batterie (6-2), traverse le passage de ventilation de poignée ( 7-1), et est finalement évacué par l'orifice d'échappement (5) prévu au bas de la poignée (7).

11. Structure de réduction de bruit et de dissipation de chaleur selon l'une quelconque des revendications 7 à 10, dans laquelle les axes du moteur (8) et du bloc batterie (9) sont colinéaires.

12. Structure de réduction de bruit et de dissipation de chaleur selon la revendication 11, dans laquelle le carter de batterie (6) est pourvu à l'intérieur d'une pluralité de nervures convexes (10), et les nervures convexes (10) limitent le bloc batterie (9) dans une direction circonférentielle et une direction radiale.

13. Collecteur de poussière, comprenant un tuyau d'entrée d'air (1), une coupelle de collecte de poussière (2), une poignée (7) et un séparateur (11), et le séparateur (11) étant prévu dans la coupelle de collecte de poussière (2), dans lequel on utilise la structure de réduction de bruit et de dissipation de chaleur selon l'une quelconque des revendications 1 à 4, 6, 7 à 10 et 12.

14. Collecteur de poussière selon la revendication 13, dans lequel un flux d'air est aspiré tangentiellement à partir d'une entrée d'air du tuyau d'entrée d'air (1), et atteint le séparateur (11) pour être soumis à une séparation cyclonique et atteint ensuite le moteur (8), le flux d'air évacué du moteur (8) entre dans le canal creux du bloc batterie (9) à travers la première interface de carter de batterie (6-1), traverse l'espace entre le bloc batterie (9) et le carter de batterie (6), puis traverse la seconde interface de carter de batterie (6-2) et est évacué de l'orifice d'échappement (5) prévu sur le carter de moteur (3).

15. Collecteur de poussière selon la revendication 13, dans lequel un flux d'air est aspiré tangentiellement à partir d'une entrée d'air du tuyau d'entrée d'air (1), et atteint le séparateur (11) pour être soumis à une séparation cyclonique, puis entre dans le moteur (8) depuis la première interface de carter intérieur de moteur (4-1), et après avoir été évacué du moteur (8), traverse la seconde interface de carter intérieur de moteur (4-2) et la première interface de carter de batterie (6-1), puis entre dans le canal creux du bloc batterie (9), traverse ensuite l'espace entre le bloc batterie (9) et le carter de batterie (6), traverse la seconde interface de carter de batterie (6-2), traverse le passage de ventilation de poignée (7-1), et est finalement évacué par l'orifice d'échappement (5) prévu au bas de la poignée (7).
